# EUROPÄISCHE PATENTSCHRIFT

(11) **EP 1 656 523 B1**
(45) Veröffentlichungstag und Bekanntmachung des Hinweises auf die Patenterteilung: **01.09.2010**
(21) Anmeldenummer: 04741085.7
(22) Anmeldetag: 16.07.2004
(51) Int. Cl.: F23R 3/04, F02C 6/04

(54) **DIFFUSOR FÜR EINE GASTURBINE UND GASTURBINE ZUR ENERGIEERZEUGUNG**
DIFFUSER FOR A GAS TURBINE AND GAS TURBINE FOR ENERGY GENERATION
DIFFUSEUR D'UNE TURBINE A GAZ ET TURBINE A GAZ DESTINEE A LA PRODUCTION D'ENERGIE

(30) Priorität: 18.08.2003 EP 03018566
(43) Veröffentlichungstag der Anmeldung: 17.05.2006
(73) Patentinhaber: SIEMENS AKTIENGESELLSCHAFT, 80333 München (DE)
(72) Erfinder: TIEMANN, Peter, 58452 Witten (DE)
(86) Internationale Anmeldenummer: PCT/EP2004/007947
(87) Internationale Veröffentlichungsnummer: WO 2005/019732

(56) Entgegenhaltungen:
- EP-A- 1 074 792
- FR-A- 2 706 533
- US-A- 4 796 429
- US-A- 4 870 826
- US-A- 5 996 331

## Beschreibung

Die Erfindung betrifft eine Gasturbine gemäß dem Oberbegriff des Anspruchs 1 und einen Diffusor gemäß dem Oberbegriff des Anspruchs 13.

Aus der DE 196 39 623 ist eine Gasturbine zur Energieerzeugung mit einem Verdichter und einer Ringbrennkammer bekannt. Zwischen dem Verdichter und der Ringbrennkammer ist ein Diffusor angeordnet, der die vom Verdichter am ringförmigen Verdichteraustritt bereitgestellte verdichtete Luft in Richtung des an der Stirnseite der Ringbrennkammer angeordneten Brenners umlenkt. Dazu weist der Diffusor Konturen zur Strömungsführung als auch ein im Querschnitt C-förmiges Umlenkblech auf, welches von einer den Strömungskanal kreuzenden Halterung befestigt ist. Ferner sind im Diffusor zur Kühlluftentnahme mehrere, über den Umfang verteilte feststehende Entnahmerohre koaxial zum Rotor angeordnet, die am Verdichteraustritt Kühlluft entnehmen und zu den Turbinenstufen der Gasturbine führen.

Die Halterung des C-förmigen Umlenkbleches stellt eine behindernde Verblockung des vom Diffusor gebildeten Strömungskanals dar. Ebenso stört die Anordnung der Entnahmerohre die im Diffusor strömende und zu den Brennern geführte Luft. Dabei können sich Strömungsverluste ergeben. Ferner müssen die Rohre, die über den Umfang verteilt sind, zur ausreichenden Bereitstellung von Kühlluft für die Turbinenstufen einen Mindestdurchmesser aufweisen, so dass nicht nur die aus der Mitte des Verdichteraustritts herausströmende verdichtete Luft entnommen wird, sondern auch die am Rand des Verdichteraustritts.

Ferner ist aus der FR 2 706 533 ein Diffusor für eine Turbomaschine bekannt, bei der die Entnahme eines Teilstroms im Diffusor zur Einstellung eines Kabinendrucks, zum Enteisen des Maschinenrumpfes oder zum Maschinenstart des Triebwerks eines Flugzeuges erfolgt. Im sich aufweitenden Strömungskanal des Diffusors ist ein keilförmiges Aufteilungselement angeordnet, welches die Verdichterendluftströmung anfänglich in zwei Teilströme aufteilt. Anschließend wird dem inneren Teilstrom durch eine hinter der Spitze des Aufteilungselementes angeordnete Öffnung ein dritter Teilstrom entnommen. Dieser wird durch die hohlen, das Aufteilungselement an der Außenwand abstützenden Rippen nach außen geführt. Der so entnommene dritte Teilstrom wird dann für die oben genannten Zwecke eingesetzt. In einer weiteren Ausgestaltung weist der aus der FR 2 706 533 bekannte Diffusor innere und äußere, das Aufteilungselement abstützende Rippen auf. Die inneren Rippen sind dabei zum Auskoppeln der Teilströmung mit einer Öffnung versehen, durch die die auszukoppelnde dritte Teilströmung in den Hohlraum der Rippe eintreten kann.

Da die so entnommene Teilströmung zum Enteisen oder beispielsweise zum Einstellen des Kabinendrucks eingesetzt wird, sind die Anforderungen an die Luftströmung bezüglich Verschmutzungsgrad, Druck und Temperatur vergleichsweise gering.

An die Kühlluft für die Turbinenschaufeln einer stationären Gasturbine sind demgegenüber vergleichsweise hohe Anforderungen gestellt, um einerseits einen besonders guten Wirkungsgrad zu erzielen und andererseits Verstopfungen oder Querschnittsverjüngungen von Prallkühlöffnungen oder Filmkühlbohrungen durch Partikel-Ablagerungen zu vermeiden bzw. zu reduzieren.

Die Aufgabe der vorliegenden Erfindung ist es daher, einen kompakten Diffusor mit einer Teilluftentnahme und eine Gasturbine mit einem solchen Diffusor anzugeben, die eine strömungstechnisch verbesserte Entnahme einer als Kühlfluid für Turbinenschaufeln eingesetzten Teilströmung ermöglicht. Ferner soll die Teilströmung bezüglich Verschmutzungsgrad, Druck und Temperatur den Anforderungen für die Verwendung als Kühlfluid in einer Gasturbine genügt.

Die auf die Gasturbine bezogene Aufgabe wird durch die Merkmale des Anspruchs 1 gelöst. Vorteilhafte Ausgestaltungen sind in den Unteransprüchen gegeben.

Die Lösung sieht, bezogen auf die Gasturbine vor, dass zum Auskoppeln eines als Kühlfluid einsetzbaren Teilstroms die Öffnung an der der Strömung zugewandten Anströmkante des Aufteilungselements (35) als Ringspaltöffnung (49) im mittleren Bereich zwischen der Außenwand und der Innenwand vorgesehen ist. Die Aufteilung des verdichteten Fluids erfolgt in einem platzsparenden Diffusor, der eine strömungsgünstige, verwirbelungs- und verlustarme Entnahme des Kühlfluids für Turbinenstufen erlaubt. Gleichzeitig kann eine günstige Weiterführung des verbleibenden Fluids in Richtung ihrer nachfolgenden verwendungsgebiete, der Ringbrennkammerwandungen, erfolgen. Die aufgeteilten Fluidströme kreuzen sich dabei ohne wesentliche Behinderungen und ohne Erzeugung von Strömungsverlusten, da die Stützelemente stromlienenförmig profiliert sind.

Üblicherweise wird nach Möglichkeit ein besonders sauberes und kühles Kühlfluid eingesetzt. Im Kühlfluid befindliche Partikel und Schwebeteilchen können sich bei prallgekühlten Bauteilen wie z.B. Turbinenschaufeln, die einem Heißgas ausgesetzt sind, an den Prallkühlöffnungen absetzten und diese schlimmstenfalls verschließen.

Aufgrund des am Verdichteraustritt und im ringförmigen Strömungskanal herrschenden Dralls im Fluid streben Schwebeteilchen und Partikel, die nicht mechanisch herausgefiltert werden konnten, zum radial inneren und äußeren Rand des Strömungskanals. Gleichfalls herrschen am radial inneren und äußeren Rand des Strömungskanals höhere Temperaturen und ein geringerer Druck im Fluid als in der dazwischenliegenden Mitte. Die Ringöffnung ist folglich genau an der Position im Diffusor angeordnet, an dem das für die Kühlung der Turbinenstufen am Meisten geeignete Fluid strömt. Dadurch strömt unter Bildung des Staudrucks selbsttätig das zur Kühlung am meisten geeignete Fluid in das Aufteilungselement hinein und wird somit von dem restlichen, weniger zur Turbinenkühlung geeigneten Fluid getrennt. Das restliche und später zur Verbrennung genutzte Fluid ist wärmer als das ausgekoppelte Kühlfluid und weist einen geringeren Druck auf.

Durch die koaxiale Ringspaltöffnung erfolgt über den gesamten Umfang des ringförmigen Aufteilungselementes die Auskoppelung des Fluids als Kühlfluid. Der Ringspalt kann dementsprechend schmaler ausgebildet sein als der Durchmesser der Entnahmerohre aus dem Stand der Technik. So wird nur das kühlste, sauberste und das mit dem höchsten Druck versehene Fluid hinter dem Verdichteraustritt bzw. Diffusoreintritt als Kühlfluid ausgekoppelt.

In einer vorteilhaften Ausgestaltung wird das Aufteilungselement durch im Ringspalt vorgesehene und in Axialrichtung verlaufende Rippen, die über den Umfang des Ringspaltes verteilt sind, verstärkt und versteift. Gleichzeitig dienen diese Rippen als Führungselemente im Aufteilungselement für das bereits ausgekoppelte Kühlfluid, so dass es in Richtung der Stützelemente geführt wird. Daher ist es vorteilhaft, wenn die Ringspaltöffnung entlang des Umfangs segmentiert ist.

Die den Strömungskanal bildenden Wände divergieren bereits in dem Abschnitt des Strömungskanals, dem das Aufteilungselement vorgeschaltet ist. Damit wird eine Druckerhöhung im Fluid erzielt, welche sich positiv auf den Druck des ausgekoppelten Kühlfluids auswirkt.

Wenn das ringförmige Aufteilungselement mittels zweier Wände keilförmig ausgebildet und mittig zwischen den beiden divergierenden Wänden des Diffusors angeordnet ist, so dass es jeweils mit einer Wand und der ihr gegenüberliegenden Wand des Diffusors einen ringförmigen Teilkanal für das Fluid bildet, kann das für die Verbrennung eines Brennmittels vorgesehene Fluid in zwei ungefähr gleichgroße Teilströme aufgeteilt werden. Der radial innen liegende Teilstrom des Fluids kann dann noch bevor es zur Verbrennung genutzt wird, zur Kühlung der radial innen liegenden Ringbrennkammerwand genutzt werden und der radial nach außen geführte Teilstrom des Fluids zur Kühlung der radial außen liegenden Ringkammerbrennwand.

Einen besonders verlustarmen Strömungsverlauf für die beiden Teilströme kann erzielt werden, wenn die beiden Teilkanäle über ihre Strömungslänge im Wesentlichen einen konstanten Strömungsquerschnitt aufweisen.

Für die sichere Befestigung des Aufteilungselementes und zum verlustarmen Kreuzen des ausgekoppelten Kühlfluids durch den radial innen liegenden Teilstrom werden die hohlen Stützelemente, die das Kühlfluid im Inneren führen, an der radial innen liegenden Innenwand abgestützt. Somit kann verlustarm das durch das Aufteilungselement in der Mitte der Fluidströmung entnommene bzw. ausgekoppelte Kühlfluid in Richtung des Rotors umgeleitet werden.

Besonders einfach kann das ausgekoppelte Kühlfluid zur Turbineneinheit geführt werden, wenn dieses radial nach innen durch das Stützelement geführt wird, um es strömungstechnisch gesehen günstig den Turbinenstufen zur Verfügung zu stellen. Dazu kommuniziert der Hohlraum des Stützelementes mit einem radial weiter innen liegenden Ringkanal, welcher zwischen Brennkammer und Rotor angeordnet ist und das Kühlfluid zur Turbinen weiterleiten kann.

Zweckmäßigerweise ist das Fluid Verdichterluft.

Eine besonders kühle Kühlluft kann den Turbinenstufen zur Verfügung gestellt werden, wenn durch den Hohlraum der äußeren Stützelemente ein Rohr mit einer Düse verläuft, welche Düse in Strömungsrichtung gesehen hinter der Öffnung mündet und durch die eine Flüssigkeit zur Erzeugung von Verdunstungskälte in den Kühlfluidstrom eindüsbar ist. Dadurch wird weniger Kühlluft benötigt, wodurch die Öffnung an sich schmaler ausgeführt und Kühlluft eingespart werden kann. Gleichfalls kann der Diffusor und das Aufteilungselement kompakter ausgeführt werden. Die Einsparung von Kühlluft führt ebenfalls zu einer Steigerung des Wirkungsgrads der Gasturbine.

Zweckmäßigerweise kann durch den Hohlraum der äußeren Stützelemente ein Rohr sich erstrecken, welches in einem im Aufteilungselement angeordneten Kanal mündet, der mit dem radial innenliegenden Teilkanal in Strömungsverbindung steht, so dass ein Brennmittel in den Teilkanal einbringbar ist.

Kostengünstig ist die Verwendung von Wasser als Flüssigkeit.

Die Aufgabe wird bezogen auf den Diffusor durch die Merkmale des Anspruchs 13 gelöst. Die Vorteile entsprechen dabei denen der vorherigen Ausführungen.

Die Erfindung wird anhand einer Zeichnung erläutert. Dabei zeigen:
- Fig. 1: einen zwischen dem Verdichteraustritt und der Ring- brennkammer angeordneten Diffusor mit einem Auftei- lungselement,
- Fig. 2: den Ausschnitt eines segmentierten Aufteilungsele- ments und
- Fig. 3: eine Gasturbine in einem Längsteilschnitt.

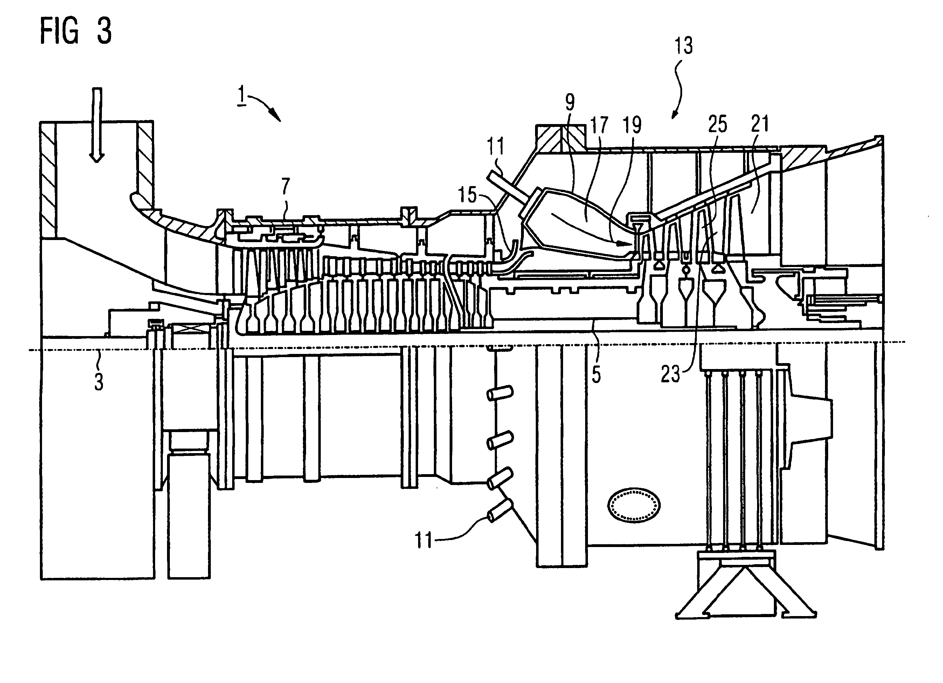

Fig. 3 zeigt eine Gasturbine 1 mit einem um eine Drehachse 3 drehgelagerten Rotor 5. Entlang des Rotors 5 weist die Gasturbine 1 einen Verdichter 7, eine Ringbrennkammer 9 und eine Turbine 13 auf, die aus vier aufeinanderfolgenden Turbinenstufen gebildet ist. An der Ringbrennkammer 9 sind über ihren Umfang verteilt mehrere Brenner 11 vorgesehen.

Der Verdichter 7 saugt Umgebungsluft an, verdichtet sie und übergibt sie an einen nachgeschalteten Diffusor 15, der an dem ringbrennkammerseitigen Ende des Verdichters 7 befestigt ist. Im Diffusor 15 wird die verdichtete Luft aufgeteilt. Der überwiegende Teil der Luft wird zum Kühlen entlang der Ringbrennkammer 9 geführt, anschließend mit einem Brennmittel vermischt und dann mittels der Brenner 11 in dem ringförmigen Verbrennungsraum 17 unter Bildung eines heißen Arbeitsmediums 19 verbrannt. Das Arbeitsmedium 19 strömt in der Turbine 13 im Heißgaskanal 21 an Leitschaufeln 23 und Laufschaufeln 25 vorbei. Dabei entspannt sich das Arbeitsmedium 19 an den am Rotor 5 befestigten Laufschaufeln 25 und treibt diesen an. Die am Rotor 5 abgreifbare Rotationsenergie wird zum Antrieb eines elektrischen Generators oder einer Kraftmaschine genutzt.

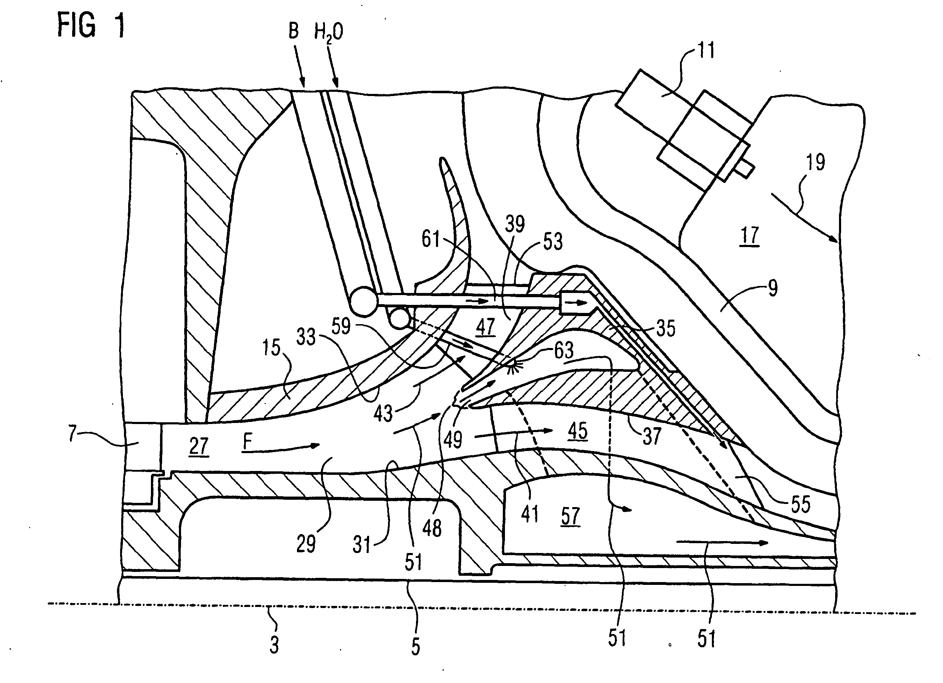

Fig. 1 zeigt den zwischen Verdichter 7 und Ringbrennkammer 9 angeordneten ringförmigen Diffusor 15 im Detail. Von einem Diffusoreintritt 27 erstreckt sich der Diffusor 15 zunächst in Axialrichtung zur Ringbrennkammer 9 hin. Ein Strömungskanal 29 wird dabei einmal von einer radial innen liegenden Innenwand 31 und von einer radial außen liegenden Außenwand 33 begrenzt. In Strömungsrichtung des Fluids F divergieren die beiden Wände 31, 33.

Im weiteren Verlauf des Strömungskanals 29 ist im Diffusor 15 ein ringförmiges und im Querschnitt keilförmiges Aufteilungselement 35 koaxial zum Rotor 5 angeordnet.

Das Aufteilungselement 35 weist eine der radial innen liegenden Innenwand 31 gegenüberliegende Wand 37 und eine der radial außen liegenden Außenwand 33 gegenüberliegende Wand 39 auf. Die Wand 37 bildet mit der radial innen liegenden Innenwand 31 einen Teilkanal 45 für einen Teilstrom 41. Ein weiterer Teilkanal 47 für einen weiteren Teilstrom 43 wird von der Wand 39 und der radial außen liegenden Außenwand 33 begrenzt.

Das ringförmige Aufteilungselement 35 weist an seiner der Strömung des Fluids F zugewandten Anströmkante 48 eine Ringspaltöffnung 49 auf.

Zwischen der radial außen liegenden Außenwand 33 und der Wand 39 erstrecken sich obere Stützelemente 53, die rippenartig und strömlinienförmig ausgestaltet sind. Ebenso geformte untere Stützelemente 55 erstrecken sich zwischen der Wand 37 und der radial innen liegenden Innenwand 31. Mittels der Stützelemente 53, 55 wird im ringförmigen Diffusor 15 das ringförmige Aufteilungselement 35 positioniert und gehalten. Die Stützelemente 53, 55 sind dabei jeweils hohl ausgeführt. Die unteren Stützelemente 55 stehen mit der Ringspaltöffnung 49 einerseits und mit einem den Rotor 5 koaxial umgreifenden Ringkanal 57 andererseits in Strömungsverbindung.

Von außen ist durch das obere Stützelement 53 ein Wasserrohr 59 radial einsteckbar, welches im Aufteilungselement 35 in Strömungsrichtung gesehen hinter der Ringspaltöffnung 49 endet. An dem dem Aufteilungselement 35 zugewandten Ende des Wasserrohres 59 ist zur Eindüsung eine Düse 63 befestigt. Am abgewandten Ende steht das Wasserrohr 59 mit einer Wasserquelle in Verbindung.

Ein weiteres durch das obere Stützelement 53 hindurchgeführtes Brennmittelrohr 61 erstreckt sich in das Aufteilungselement 35 hinein und kommuniziert dort mit einem Kanal, der in den ersten Teilkanal 45 mündet. Dem Brennmittelrohr 61 ist ein Brennmittel B zuführbar.

Während des Betriebes der Gasturbine 1 strömt vom Verdichter 7 verdichtete Luft als Fluid F durch den Diffusoreintritt 27 in den Diffusor 15 hinein. Das keilförmige Aufteilungselement 35 teilt das Fluid F in zwei ungefähr gleichgroße Teilströme 41, 43 und in einen mittleren Teilstrom 51 auf. Der Teilstrom 51 strömt im Bereich der Anströmkante 48 in den Ringspaltkanal 49 hinein und wird so der Fluidströmung entnommen bzw. ausgekoppelt.

Der erste Teilstrom 41 wird zur radial innen liegenden Ringbrennkammerwand geführt. Von dort aus strömt der Teilstrom 41 die Ringbrennkammerwand kühlend an dieser entlang und wird anschließend im Brenner 11 mit einem Brennmittel vermischt. Das Gemisch wird dann in der Ringbrennkammer 9 zum heißen Arbeitsmedium 19 verbrannt.

Der im weiteren Teilkanal 47 strömende Teilstrom 43 wird nach dem Austreten aus dem Diffusor 15 zur radial äußeren Ringbrennkammerwand geführt und von dort aus weiter in den Brenner 11, wo er ebenfalls mit einem Brennmittel vermischt und anschließend im Verbrennungsraum 17 zum heißen Arbeitsmedium 19 verbrannt wird.

Der mittlere Teilstrom 51 strömt in das Aufteilungselement 35 hinein und wird in Richtung der unteren Stützelemente 55 umgelenkt. Von dort aus strömt es durch die hohlen Stützelemente 55 in Richtung des Rotors 5 und mündet in einen Ringkanal 57. Dann wird dieser Teilstrom 51 als Kühlfluid parallel zur Drehachse 3 zu den Turbinenstufen geführt und dort zur Kühlung der Leitschaufeln 23 und Laufschaufeln 25 eingesetzt.

Der mittlere Teilstrom 51 weist für die Verwendung als Kühlfluid die günstigsten Eigenschaften auf. Im Strömungskanal 29 ist die Verdichterluft besonders in der Nähe der radial innen und außen liegenden Wände 31, 33 des Diffusors 15 stärker mit Partikeln verschmutzt, jedoch ist die dazwischenliegende mittlere Strömung weitestgehend partikelfrei. Zusätzlich ist ebenfalls im gleichen Bereich die niedrigste Temperatur bei höchstem Druck vorhanden. Deshalb wird dieser Teil der Strömung zur Kühlung der in Turbine angeordneten Schaufeln eingesetzt.

Die Temperatur des mittleren Teilstroms 51 kann zusätzlich verringert werden, indem durch das Wasserrohr 59 hinter der Ringspaltöffnung 49 Wasser H₂O eingedüst wird. Die Düse 63 zerstäubt das Wasser H₂O zu kleinen Wasserperlen, so dass es leichter verdunsten kann, wodurch es dem Teilstrom 51 Wärme entzieht. Dadurch wird die benötigte Menge an Kühlfluid weiter reduziert und die sich in Radialrichtung erstreckende Öffnung, insbesondere die Ringspaltöffnung 49, kann dadurch noch schmaler ausgeführt werden.

Das mit dem Teilstrom 41 sich vermischende Brennmittel wird durch das Brennmittelrohr 61 eingedüst. Während der Kühlung der radial inneren Ringbrennkammerwand wird das Gemisch erwärmt, was sich bei der Verbrennung positiv auf den NOx-Gehalt im Arbeitsmedium 19 auswirkt, d.h. der NOx-Gehalt wird reduziert. Die Zuführung des Brennmittels B erfolgt in Strömungsrichtung gesehen weit hinter der Aufteilung des Fluids F im hinteren Bereich des Teilkanals 45. Dadurch wird eine Rückströmung des Brennmittels B und somit eine Vermischung mit dem Teilstrom 51 vermieden.

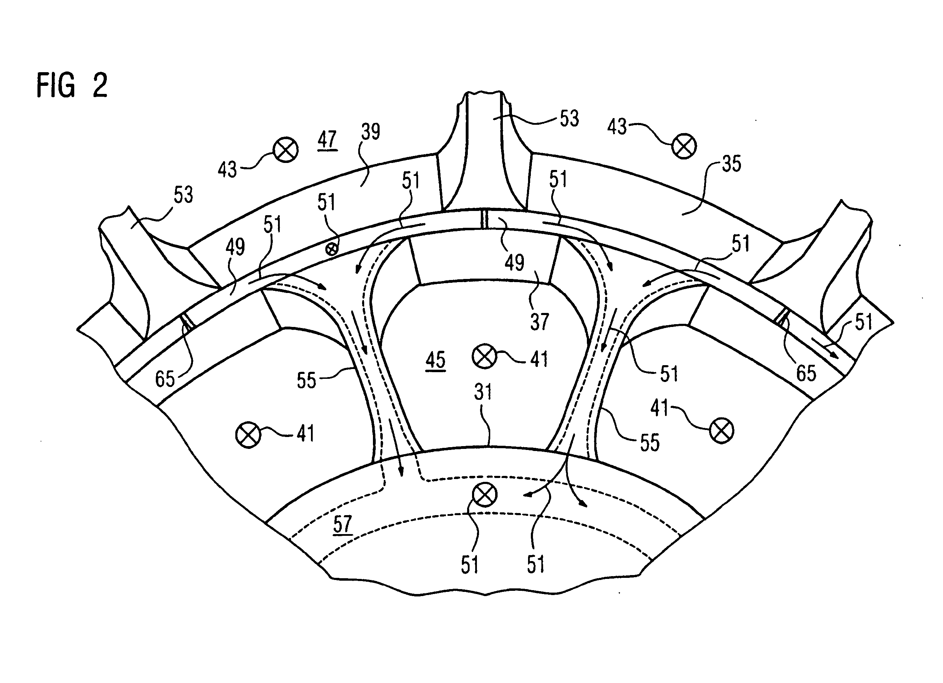

Fig. 2 zeigt das Aufteilungselement 35 in Strömungsrichtung gesehen. Das Aufteilungselement 35 ist mittels der unteren Stützelemente 55 an der radial innenliegenden Innenwand abgestützt und mittels der oberen Stützelemente 53 an der hier nicht dargestellten radial außenliegenden Außenwand 33. Die Wände 37, 39 bilden jeweils mit den ihnen gegenüberliegenden Wänden 31, 33 des Diffusors 15 einen Teilkanal 45, 47.

Das Aufteilungselement 35 weist an seiner dem Verdichter 7 zugewandten Seite eine Ringspaltöffnung 49 auf, die mittels radial erstreckender Rippen 65 segmentiert ist.

Das Fluid (F) strömt vom Verdichter 7 aus im Diffusor 15 in Richtung des Aufteilungselements 35 und teilt sich in drei Teilströme 41, 43, 51 auf.

Der mittlere Teilstrom 51 strömt in die Ringspaltöffnung 49 hinein und wird durch die innere Kontur des hohlen Aufteilungselementes 35 in Richtung des Rotors 5 umgelenkt. Anschließend durchströmt es die hohlen unteren Stützrippen 55 und wird dann in den Ringkanal 57 eingespeist. Von dort aus wird der Teilstrom 51 in Axialrichtung zu den Turbinenstufen geführt und dort zum Kühlen der heißgasbeaufschlagten Leit- und Laufschaufeln eingesetzt, so dass deren Prall- und Filmkühlöffnungen durch den abgesenkten Verschmutzungsgrad der Kühlluft diese länger bestimmungsgemäß bereitstellen können.

## Patentansprüche

1. Gasturbine (1) zur Energieerzeugung,
mit einem koaxial zu einem drehgelagerten Rotor (5) angeordneten Axialverdichter zum Verdichten eines angesaugten gasförmigen Fluids (F), das zumindest teilweise in einer nachgeordneten Brennkammer zum Verbrennen eines Brennmittels unter Bildung eines heißen Arbeitsmediums (19) dient,
mit einem zwischen dem Axialverdichter und der Brennkammer koaxial zum Rotor (5) angeordneten ringförmigen Diffusor (15) zur Aufteilung und Umlenkung des Fluids (F), welcher von einer Außenwand (33) und einer Innenwand (31) gebildet wird,
wobei ein koaxial zum Rotor (5) angeordnetes ringförmiges Aufteilungselement (35) von mehreren hohlen rippenförmigen Stützelementen (53, 55) an den Händen (31, 33) abgestützt ist und
wobei im Diffusor (15) zum Auskoppeln eines Teilstroms (51) des Fluids (F) zumindest eine der Fluidströmung zugewandte Öffnung vorgesehen ist,
**dadurch gekennzeichnet,**
**dass** zum Auskoppeln eines als Kühlfluid einsetzbaren Teilstroms (51) die Öffnung an der der Strömung zugewandten Anströmkante (48) des Aufteilungselements (35) als Ringspaltöffnung (49) im mittleren Bereich zwischen der Außenwand (33) und der Innenwand (31) vorgesehen ist.

2. Gasturbine (1) nach Anspruch 1,
**dadurch gekennzeichnet,**
**dass** die Ringspaltöffnung (49) entlang des Umfangs segmentiert ist.

3. Gasturbine (1) nach einem der Ansprüche 1 bis 2,
**dadurch gekennzeichnet,**
**dass** der dem Aufteilungselement (35) im Diffusor (15) vorgeschaltete Abschnitt des Strömungskanals (29) in Strömungsrichtung des Fluids (F) gesehen divergiert.

4. Gasturbine (1) nach einem der Ansprüche 1 bis 3,
**dadurch gekennzeichnet,**
**dass** das ringförmige Aufteilungselement (35) mittels zweier schenkelartiger Wände (37, 39) keilförmig ausgebildet und mittig zwischen den beiden divergierenden Wände (31, 33) des Diffusors (15) angeordnet ist, so dass es jeweils mit einer Wand (37, 39) und der ihr gegenüberliegenden Wand (31, 33) des Diffusors (15) einen ringförmigen Teilkanal (45, 47) für das Fluid bildet.

5. Gasturbine (1) nach Anspruch 4,
**dadurch gekennzeichnet,**
**dass** die beiden Teilkanäle (45, 47) über ihre Strömungslänge im wesentlichen einen konstant Querschnitt aufweisen.

6. Gasturbine (1) nach einem der Ansprüche 1 bis 5,
**dadurch gekennzeichnet,**
**dass** die das Kühlfluid im Inneren führenden Stützelemente (55) an der radial innen liegenden Innenwand (31) abgestützt sind.

7. Gasturbine (1) nach einem der Ansprüche 1 bis 6,
**dadurch gekennzeichnet,**
**dass** der ausgekoppelte Teilstrom (51) durch die inneren Stützelemente (55) in Richtung des Rotors (5) führbar ist.

8. Gasturbine (1) nach einem der Ansprüche 1 bis 7,
**dadurch gekennzeichnet,**
**dass** der Ho lraum des Stützelementes (55) mit einem radial weiter innenliegenden Ringkanal (57) kommuniziert.

9. Gasturbine (1) nach einem der Ansprüche 1 bis 8,
**dadurch gekennzeichnet,**
**dass** das Fluid Verdichterluft ist.

10. Gasturbine (1) nach einem der Ansprüche 1 bis 9,
**dadurch gekennzeichnet,**
**dass** durch den Hohlraum der äußeren Stützelemente (53) ein Rohr (59) mit einer Düse (63) verläuft, welche Düse (63) in Strömungsrichtung gesehen hinter der Öffnung mündet und durch die eine Flüssigkeit zur Erzeugung von Verdunstungskälte in den Kühlfluidstrom eindüsbar ist.

11. Gasturbine (1) nach einem der Ansprüche 1 bis 10,
**dadurch gekennzeichnet,**
**dass** durch den Hohlraum der äußeren Stützelemente (53) ein Rohr (61) sich erstreckt, welches in einem im Aufteilungselement (35) angeordneten Kanal mündet, der mit einem radial innenliegenden Teilkanal (45) in Strömungsverbindung steht, wobei der Teilkanal zwischen der Innenwand (31) und einer der Innenwand (31) gegenüberliegenden Wand (37) des Aufteilungselementes gebildet ist, so dass ein Brennmittel (B) in den Teilkanal (45) einbringbar ist.

12. Gasturbine (1) nach Anspruch 10,
**dadurch gekennzeichnet,**
**dass** die Flüssigkeit Wasser (H₂O) ist.

13. Diffusor (15) für eine Gasturbine (1) zur Energieerzeugung,
mit einem Diffusoreintritt (27), dem in Strömungsrichtung eines Fluids (F) ein Diffusoraustritt folgt und zwischen denen unter Bildung eines Strömungskanals sich radial innen eine Innenwand (31) und radial außen eine Außenwand (33) divergierend erstreckt sowie
zwischen denen ein (1) ringförmiges Aufteilungselement (35) von mehreren hohlen rippenförmigen Stützelementen (53, 55) an den Wänden (31, 33) abgestützt ist wobei des Aufteilungselement (35) koaxial zum Rotor (5) der Gasturbine angeordnet werden kann,
mit zumindest einer zum Auskoppeln eines Teilstroms (51) des Fluids (F), der Fluidströmung zugewandten, im Diffusor (15) angeordneten Öffnung,
**dadurch gekennzeichnet,**
**dass** zum Auskoppeln eines als Kühlfluid einsetzbaren Teilstroms (51) die Öffnung an der der Strömung zugewandten Anströmkante des Aufteilungselement (35) als Ringspaltöffnung (49) im mittleren Bereich zwischen der Außenwand (33) und der Innenwand (31) vorgesehen ist.

## Claims

1. Gas turbine (1) for power generation,
having an axial compressor, which is arranged coaxially with respect to a rotationally mounted rotor (5), for compressing an intake gaseous fluid (F), which is at least partially used in a downstream combustion chamber for combustion of a fuel so as to form a hot working medium (19),
having an annular diffuser (15), which is arranged coaxially with respect to the rotor (5) between the axial compressor and the combustion chamber, for distributing and diverting the fluid (F), the diffuser being formed by an outer wall (33) and an inner wall (31),
an annular distribution element (35), which is arranged coaxially with respect to the rotor (5), being supported against the walls (31, 33) by a plurality of hollow rib-like supporting elements (53, 55), and
at least one opening which faces the flow of fluid being provided in the diffuser (15) for the purpose of decoupling a part-stream (51) of the fluid (F),
**characterized**
**in that** to decouple a part-stream (51) that can be used as cooling fluid, the opening is provided on the leading edge (48), facing the flow, of the distribution element (35) in the form of an annular gap opening (49) in the central region between the outer wall (33) and the inner wall (31).

2. Gas turbine (1) according to Claim 1,
**characterized**
**in that** the annular gap opening (49) is segmented along the circumference.

3. Gas turbine according to either of Claims 1 and 2, **characterized**
**in that** the portion of the flow passage (29) which lies upstream of the distribution element (35) in the diffuser (15) diverges as seen in the direction of flow of the fluid (F).

4. Gas turbine (1) according to one of Claims 1 to 3, **characterized**
**in that** the annular distribution element (35) is formed in a wedge shape by means of two limb-like walls (37, 39) and is arranged centrally between the two diverging walls (31, 33) of the diffuser (15), so that by means of in each case one wall (37, 39) and the opposite wall (31, 33) of the diffuser (15), it forms an annular part-passage (45, 47) for the fluid.

5. Gas turbine (1) according to Claim 4,
**characterized**
**in that** the two part-passages (45, 47) have a substantially constant cross section over their flow length.

6. Gas turbine (1) according to one of Claims 1 to 5, **characterized**
**in that** the supporting elements (55), which route the cooling fluid in the interior, are supported against the inner wall (31) located on the radially inner side.

7. Gas turbine (1) according to one of Claims 1 to 6, **characterized**
**in that** the decoupled part-stream (51) can be routed in the direction of the rotor (5) by the inner supporting elements (55).

8. Gas turbine (1) according to one of Claims 1 to 7, **characterized**
**in that** the cavity in the supporting element (55) is in communication with an annular passage (57) located radially further inward.

9. Gas turbine (1) according to one of Claims 1 to 8, **characterized**
**in that** the fluid is compressor air.

10. Gas turbine (1) according to one of Claims 1 to 9, **characterized**
**in that** a tube (59) with a nozzle (63) runs through the cavity in the outer supporting elements (53), which nozzle (63) opens out downstream of the opening, as seen in the direction of flow, and by means of which a liquid for generating heat of evaporation can be injected into the cooling fluid stream.

11. Gas turbine (1) according to one of Claims 1 to 10, **characterized**
**in that** a tube (61) extends through the cavity in the outer supporting elements (55) and opens out in a passage which is arranged in the distribution element (35) and is flow-connected to a radially inner part-passage (45), the part-passage being formed between the inner wall (31) and a wall (37) of the distribution element facing the inner wall (31), so that a fuel (B) can be introduced into the part-passage (45).

12. Gas turbine (1) according to Claim 10,
**characterized**
**in that** the liquid is water (H₂O).

13. Diffuser (15) for a gas turbine (1) for power generation, having a diffuser inlet (27), which is followed in the direction of flow of a fluid (F) by a diffuser outlet, with an inner wall (31) on the radially inner side and an outer wall (33) on the radially outer side extending in diverging fashion between them, so as to form a flow passage, and an annular distribution element (35), being supported against the walls (31, 33) between the diffuser inlet and diffuser outlet by a plurality of hollow rib-like supporting elements (53, 55), wherein the distribution element (35) can be arranged coaxially with respect to the rotor (5) of the gas turbine,
having at least one opening, which is arranged in the diffuser (15), facing the flow of fluid, for decoupling a part-stream (51) of the fluid (F),
**characterized**
**in that** to decouple a part-stream (51) which can be used as cooling fluid, the opening is provided on the leading edge, facing the flow, of the distribution element (35) in the form of an annular gap opening (49) in the central region between the outer wall (33) and the inner wall (31).

## Revendications

1. Turbine ( 1 ) à gaz pour la production d'énergie, comprenant un compresseur axial, qui est disposé coaxialement à un rotor ( 5 ) monté tournant et qui est destiné à comprimer un fluide ( F ) gazeux aspiré, qui sert, au moins en partie, dans une chambre de combustion en aval, à la combustion d'un combustible avec formation d'un fluide ( 19 ) de travail chaud,
comprenant un diffuseur ( 15 ) annulaire, qui est disposé coaxialement au rotor ( 5 ) entre le compresseur axial et la chambre de combustion, qui est destiné à répartir et à dévier le fluide ( F ) et qui est formé par une paroi ( 33 ) extérieure et par une paroi ( 31 ) intérieure,
dans laquelle un élément ( 35 ) de répartition annulaire est disposé coaxialement au rotor ( 5 ) et appuyé sur les parois ( 31, 33 ) par plusieurs éléments ( 53, 55 ) d'appui creux en forme de nervures et
dans laquelle il est prévu dans le diffuseur ( 15 ), pour faire sortir un courant ( 51 ) à partir du fluide ( F ), au moins une ouverture tournée vers le courant de fluide, **caractérisée**
**en ce que**, pour faire sortir un courant ( 51 ) partiel pouvant être utilisé comme fluide de refroidissement, l'ouverture est prévue dans la partie médiane entre la paroi ( 33 ) extérieure et la paroi ( 31 ) intérieure en tant qu'ouverture ( 49 ) à fente annulaire sur le bord ( 48 ) d'attaque de l'élément ( 35 ) de répartition, qui est tourné vers le courant.

2. Turbine ( 1 ) à gaz suivant la revendication 1,
**caractérisée**
**en ce que** l'ouverture ( 49 ) sous la forme d'une fente annulaire est segmentée le long de la périphérie.

3. Turbine ( 1 ) à gaz suivant l'une des revendications 1 à 2,
**caractérisée**
**en ce que** la section du canal ( 29 ) d'écoulement, en amont dans le diffuseur ( 15 ) de l'élément ( 35 ) de répartition, diverge, considérée dans le sens d'écoulement du courant du fluide ( F ).

4. Turbine ( 1 ) à gaz suivant l'une des revendications 1 à 3,
**caractérisée**
**en ce que** l'élément ( 35 ) annulaire de répartition est constitué sous la forme d'un coin au moyen de deux parois ( 37, 39 ) de type à branches et disposé au milieu entre les deux parois ( 31, 33 ) divergentes du diffuseur ( 35 ), de manière à former, respectivement, avec une paroi ( 37, 39 ) et la paroi ( 31, 33 ) du diffuseur qui lui est opposée, un canal ( 45, 47 ) partiel annulaire pour le fluide.

5. Turbine ( 1 ) à gaz suivant la revendication 4,
**caractérisée**
**en ce que** les deux canaux ( 45, 47 ) partiels ont une section transversale sensiblement constante sur leur longueur.

6. Turbine ( 1 ) à gaz suivant l'une des revendications 1 à 5,
**caractérisée**
**en ce que** les éléments ( 55 ) d'appui conduisant le fluide de refroidissement à l'intérieur sont appuyés sur la paroi ( 33 ) intérieure se trouvant à l'intérieur radialement.

7. Turbine ( 1 ) à gaz suivant l'une des revendications 1 à 6,
**caractérisée**
**en ce que** le courant ( 51 ) partiel, qui est sorti, peut être conduit en direction du rotor ( 5 ) par les éléments ( 55 ) d'appui intérieurs.

8. Turbine ( 1 ) à gaz suivant la revendication 1,
**caractérisée**
**en ce que** la cavité de l'élément ( 55 ) d'appui communique avec un canal ( 57 ) annulaire se trouvant radialement davantage à l'intérieur.

9. Turbine ( 1 ) à gaz suivant l'une des revendications 1 à 8,
**caractérisée**
**en ce que** le fluide est de l'air de compresseur.

10. Turbine ( 1 ) à gaz suivant l'une des revendications 1 à 9,
**caractérisée**
**en ce que**, dans la cavité des éléments ( 53 ) d'appui extérieurs, s'étend un tube ( 59 ) ayant une buse ( 63 ), laquelle buse ( 63 ) débouche, considérée dans le sens du courant, derrière l'ouverture et par cette buse un liquide peut être injecté dans le courant du fluide de refroidissement pour la production de froid par évaporation.

11. Turbine ( 1 ) à gaz suivant l'une des revendications 1 à 10,
**caractérisée**
**en ce que** dans la cavité des éléments ( 53 ) d'appui extérieurs s'étend un tube ( 61 ), qui débouche dans un canal disposé dans un élément ( 35 ) de répartition et qui communique fluidiquement avec un canal ( 45 ) partiel se trouvant radialement à l'intérieur, le canal partiel étant formé entre la paroi ( 31 ) intérieure et une paroi ( 37 ) de l'élément de répartition opposée à la paroi ( 31 ) intérieure, de sorte qu'un fluide combustible peut être introduit dans le canal ( 45 ) partiel.

12. turbin ( 1 ) à gaz suivant la revendication 10,
**caractérisée**
**en ce que** le liquide est de l'eau ( H₂O ).

13. diffuseur ( 15 ) pour une turbine ( 1 ) à gaz pour la production d'énergie
comprenant une entrée ( 27 ) de diffuseur, qui suit dans le sens du courant d'un fluide ( F ) une sortie de diffuseur et entre lesquelles s'étend, avec formation d'un canal d'écoulement, radialement à l'intérieur, une paroi ( 32 ) intérieure et, radialement à l'extérieur, une paroi ( 33 ) extérieure, ainsi que
entre lesquelles un élément ( 35 ) annulaire de répartition est appuyé sur les parois ( 31, 33 ) par plusieurs éléments ( 53, 55 ) d'appui creux en forme de nervures, l'élément ( 35 ) de répartition pouvant être disposé coaxialement au rotor ( 5 ) de la turbine à gaz,
comprenant au moins une ouverture destinée à faire sortir un courant ( 51 ) partiel du fluide ( F ), tournée vers le courant de fluide et disposée dans le diffuseur ( 15 ), **caractérisé**
**en ce que**, pour faire sortir un courant ( 51 ) partiel pouvant être utilisé comme fluide de refroidissement, l'ouverture est prévue sur le bord d'attaque de l'élément ( 35 ) de répartition tourné vers le courant sous la forme d'une ouverture ( 49 ) à fente annulaire dans la partie médiane entre la paroi ( 33 ) extérieure et la paroi ( 31 ) intérieure.
